# EUROPEAN PATENT APPLICATION

(11) **EP 4 664 662 A1**
(43) Date of publication of application: **17.12.2025**
(21) Application number: 25172666.7
(22) Date of filing: 25.04.2025
(51) Int. Cl.: H01M 50/533, H01M 50/536, H01M 50/538, H01M 50/553

(54) **SECONDARY BATTERY AND METHOD OF MANUFACTURING SECONDARY BATTERY**

(30) Priority: 13.06.2024 JP 2024095714
(71) Applicant: Prime Planet Energy & Solutions, Inc., Chuo-ku, Tokyo 103-0022 (JP)
(72) Inventor: OSHIMA, Kazuki, Tokyo, 103-0022 (JP); WAKIMOTO, Ryoichi, Tokyo, 103-0022 (JP)
(74) Representative: Kuhnen & Wacker Patent- und Rechtsanwaltsbüro PartG mbB

(57) **Abstract**

In the present method of manufacturing a secondary battery (1), a current collector (53A) is a first stack in which a plurality of metal plates (4300) are stacked, the current collector (53A) includes a first region (532A) and a second region (532B), a positive electrode tab group (250, 280) is joined to the first region (532A), a positive electrode current collection portion (420) is joined to the second region (532B), the method including: a preparation step of preparing the current collector (53A) having a first joining portion (532T) in which the metal plates are partially joined together; a first tab group connection step of joining the positive electrode tab group (250, 280) to the current collector (53A); and an other conductive member connection step of joining the positive electrode current collection portion (420) to the current collector (53A). According to the present method of manufacturing the secondary battery (1), occurrence of damage to the tab group can be suppressed.

## Description

### CROSS REFERENCE TO RELATED APPLICATIONS

This nonprovisional application is based on Japanese Patent Application No. 2024-095714 filed on June 13, 2024 with the Japan Patent Office, the entire contents of which are hereby incorporated by reference.

### BACKGROUND OF THE INVENTION

### Field of the Invention

The present technology relates to a secondary battery and a method of manufacturing the secondary battery.

### Description of the Background Art

Japanese Patent Laying-Open No. 2021-099936 relates to an invention of a power storage device and discloses a configuration in which a tab group connected to a current collector is bent. Each of Japanese Patent No. 5337586 and Japanese Patent No. 4120353 discloses that a metal plate stack is used for a current collector. It is disclosed that a portion of the metal plate stack ultrasonically joined in advance is laser-welded to another conductive member.

### SUMMARY OF THE INVENTION

In order to attain the structure in which the tab group is bent, the length of the tab group needs to be long. When the length of the tab group is long, the tab group may be bent or curved unintendedly in a manufacturing process for a secondary battery or the like, with the result that the tab group may be damaged.

An object of the present technology is to provide: a secondary battery including a configuration by which occurrence of damage to a tab group can be suppressed; and a method of manufacturing the secondary battery.

The present technology provides the following secondary battery and the following method of manufacturing the secondary battery.
[1] A method of manufacturing a secondary battery, wherein the secondary battery includes an electrode assembly including a first electrode and a second electrode having a polarity different from a polarity of the first electrode, a case that accommodates the electrode assembly, a first tab group in which a plurality of first electrode tabs electrically connected to the first electrode are stacked, and a first current collector connected to the first tab group, the first current collector is a first stack in which a plurality of metal plates are stacked, the first current collector includes a first region and a second region, the first tab group is joined to the first region, and another conductive member is joined to the second region, the method comprising preparing the first current collector having a joining portion in which the metal plates are partially joined together; joining the first tab group to the first region; and joining the other conductive member to the second region.
[2] The method of manufacturing the secondary battery according to [1], comprising bending the first current collector between the first region and the second region after the joining the first tab group to the first region and the joining the other conductive member to the second region.
[3] The method of manufacturing the secondary battery according to [1] or [2], comprising joining the first current collector and the other conductive member to each other by applying a high-energy ray to the joining portion of the first current collector in which the metal plates are joined together.
[4] The method of manufacturing the secondary battery according to [3], wherein the other conductive member has a protrusion, the method comprising joining the first current collector and the protrusion to each other by applying the high-energy ray to the first current collector disposed on the protrusion.
[5] The method of manufacturing the secondary battery according to any one of [1] to [4], comprising joining the first current collector and the other conductive member to each other by applying a high-energy ray to a region of the first current collector in which the metal plates are not joined together.
[6] The method of manufacturing the secondary battery according to [5], comprising joining the first current collector and the other conductive member to each other in a state in which the first current collector is pressed using a jig against the other conductive member in a surrounding of the region to which the high-energy ray is applied.
[7] The method of manufacturing the secondary battery according to any one of [1] to [6], comprising joining the first current collector and the first tab group to each other with the first tab group being brought into abutment with the joining portion of the first current collector in which the metal plates are joined together.
[8] The method of manufacturing the secondary battery according to any one of [1] to [7], comprising joining the first current collector and the first tab group to each other with the first tab group being brough into abutment with a region of the first current collector in which the metal plates are not joined together.
[9] A secondary battery comprising: an electrode assembly including a first electrode and a second electrode having a polarity different from a polarity of the first electrode; a case that accommodates the electrode assembly; a first tab group in which a plurality of first electrode tabs electrically connected to the first electrode are stacked; and a first current collector connected to the first tab group, wherein the first current collector is a first stack in which a plurality of metal plates are stacked, the first current collector includes a first region and a second region, the first tab group is joined to the first region, another conductive member is joined to the second region, and the first current collector has a region in which the metal plates are joined together, apart from a portion joined to the first tab group and a portion joined to the other conductive member.
[10] The secondary battery according to [9], wherein the first current collector has a first joining portion in which the metal plates are joined together, a second joining portion in which the first current collector and the other conductive member are laser-welded is provided, and when viewed along a stacking direction of the metal plates, an area of the first joining portion is larger than an area of the second joining portion.
[11] The secondary battery according to [10], wherein the second joining portion is provided in the first joining portion.
[12] The secondary battery according to any one of [9] to [11], wherein the first current collector is provided with a plurality of first recesses in a first outer surface that is one outer surface of the first current collector, and a joining portion between the first current collector and the other conductive member is formed in a form of a line along the first recesses.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view showing a configuration of a secondary battery according to a first embodiment.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a diagram showing a state in which the secondary battery shown in Fig. 1 is viewed in a direction of arrow V.
Fig. 6 is a front cross sectional view of the secondary battery shown in Fig. 1.
Fig. 7 is a cross sectional view of a negative electrode (cross sectional view along VII-VII in Fig. 8).
Fig. 8 is a front view showing the negative electrode.
Fig. 9 is a cross sectional view of a positive electrode (cross sectional view along IX-IX in Fig. 10).
Fig. 10 is a front view showing the positive electrode.
Fig. 11 is a diagram showing a configuration around a negative electrode current collector.
Fig. 12 is a diagram showing a configuration around a positive electrode current collector.
Fig. 13 is a flowchart showing a method of manufacturing the secondary battery.
Fig. 14 is a diagram showing a state in which the current collectors are joined to a first electrode assembly and a second electrode assembly .
Fig. 15 is a diagram showing a state in which a sealing plate is assembled to a current collector on the negative electrode side.
Fig. 16 is a diagram showing a state in which the first electrode assembly and the second electrode assembly are overlapped with each other.
Fig. 17 is a diagram showing a step of inserting the first electrode assembly and the second electrode assembly into a case main body.
Fig. 18 is a diagram showing a state in which a sealing plate is assembled to a current collector on the positive electrode side.
Fig. 19 is a diagram showing a state in which an opening of the case main body is sealed.
Fig. 20 is a diagram showing a metal plate of the current collector.
Fig. 21 is a developed view of a current collector of a second embodiment.
Fig. 22 is a cross sectional view taken along a line XXII-XXII in Fig. 21.
Fig. 23 is a cross sectional view taken along a line XXIII-XXIII in Fig. 21.
Fig. 24 is a cross sectional view taken along a line XXIV-XXIV in Fig. 21.
Fig. 25 is a developed view of a current collector of a third embodiment.
Fig. 26 is a developed view of a current collector of a fourth embodiment.
Fig. 27 is a developed view of a current collector of a fifth embodiment.
Fig. 28 is a developed view of a current collector of a sixth embodiment.
Fig. 29 is a developed view of a current collector of a seventh embodiment.
Fig. 30 is a developed view of a current collector of an eighth embodiment.
Fig. 31 is a developed view of a current collector of a ninth embodiment.
Fig. 32 is a developed view of a current collector of a tenth embodiment.
Fig. 33 is a developed view of a current collector of an eleventh embodiment.
Fig. 34 is a developed view of a current collector of a twelfth embodiment.
Fig. 35 is a schematic cross sectional view showing a state during laser welding in a thirteenth embodiment.
Fig. 36 is a schematic cross sectional view showing a state during laser welding in a fourteenth embodiment.
Fig. 37 is a schematic plan view showing one ultrasonic joining mark in the fourteenth embodiment.
Fig. 38 is a plan view showing exemplary ultrasonic joining marks in the fourteenth embodiment.
Fig. 39 is a plan view showing another exemplary ultrasonic joining marks in the fourteenth embodiment.
Fig. 40 is a plan view showing still another exemplary ultrasonic joining marks in the fourteenth embodiment.
Fig. 41 is a developed view showing a joining portion between a second region of a current collector and a positive electrode tab group in a fifteenth embodiment.
Fig. 42 is a cross sectional view of a joining region provided in advance in a first region of a current collector in a sixteenth embodiment.
Fig. 43 is a first schematic view in a case where a positive electrode tab group is joined to the first region of the current collector in the sixteenth embodiment.
Fig. 44 is a second schematic view in a case where the positive electrode tab group is joined to the first region of the current collector in the sixteenth embodiment.
Fig. 45 is a developed view of a current collector of a seventeenth embodiment.
Fig. 46 is a schematic view showing ultrasonic joining between a positive electrode tab group and a first region in the seventeenth embodiment.
Fig. 47 is a schematic view showing laser welding between the positive electrode current collector and the second region in the seventeenth embodiment.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

In the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

In the present specification, the terms "comprise", "include", and "have" are open-end terms. That is, when a certain configuration is included, a configuration other than the foregoing configuration may or may not be included.

In the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "secondary battery" may include a lithium ion battery as well as a nickel-metal hydride battery, a sodium-ion battery, and the like. In the present specification, the term "electrode" may collectively represent a positive electrode and a negative electrode.

In the figures, when an electrode assembly included in the secondary battery is a stacked type electrode assembly, an X direction is defined as a long-side direction of a stacked surface, whereas when the electrode assembly is a wound type electrode assembly, the X direction is defined as a direction along a winding axis thereof. Further, a Y direction is defined as a short-side direction of the electrode assembly when viewed in the X direction, and a Z direction is defined as a long-side direction of the electrode assembly when viewed in the X direction. In order to facilitate understanding of the invention, the size of each configuration in the figures may be illustrated to be changed from its actual size.

In the present specification, the X direction may be referred to as a "width direction" of each of a secondary battery 1, an electrode assembly 200, and a case main body 110, the Z direction may be referred to as a "height direction" of each of secondary battery 1, electrode assembly 200, and case main body 110, and the Y direction may be referred to as a "thickness direction" of each of secondary battery 1, electrode assembly 200, and case main body 110.

### (First Embodiment: Overall Configuration of Battery)

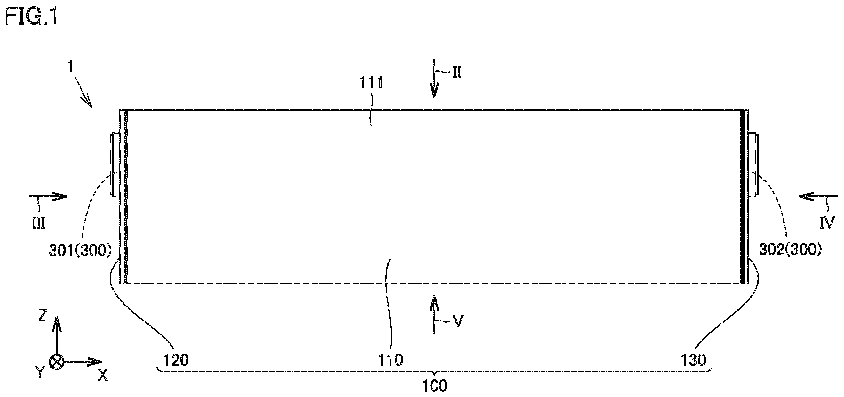

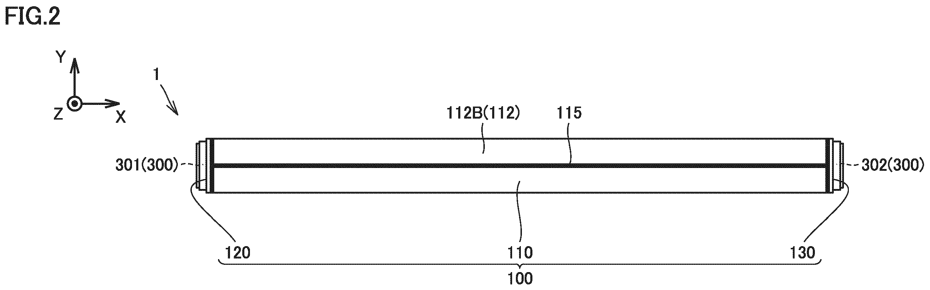

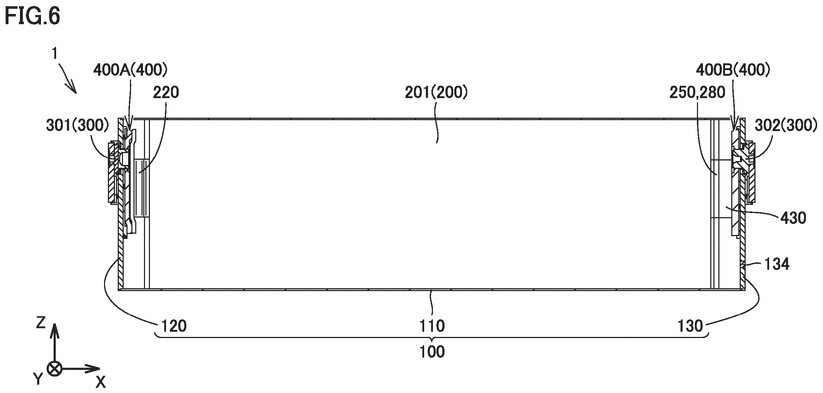

Fig. 1 is a front view of a secondary battery 1 according to a first embodiment. Figs. 2 to 5 are diagrams showing states of secondary battery 1 shown in Fig. 1 when viewed in directions of arrows II, III, IV, and V respectively. Fig. 6 is a front cross sectional view of secondary battery 1 shown in Fig. 1.

Secondary battery 1 can be mounted on a battery electric vehicle (BEV), a plug-in hybrid electric vehicle (PHEV), a hybrid electric vehicle (HEV), or the like. It should be noted that the purpose of use of secondary battery 1 is not limited to the use on a vehicle.

As shown in Figs. 1 to 6, secondary battery 1 includes a case 100, an electrode assembly 200, electrode terminals 300, and current collectors 400. Case 100 includes case main body 110, a sealing plate 120, and a sealing plate 130.

When forming a battery assembly including secondary battery 1, a plurality of secondary batteries 1 are arranged in the thickness direction of each of the plurality of secondary batteries 1. Secondary batteries 1 arranged may be restrained in the arrangement direction (Y direction) by a restraint member to form a battery module, or the battery assembly may be directly supported by a side surface of a case of a battery pack without using the restraint member.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

As shown in Figs. 1 and 2, sealing plate 120 and sealing plate 130 are provided at respective end portions of case main body 110. Case main body 110 can be formed to have a prismatic tubular shape in, for example, the following manner: end sides of a plate-shaped member having been bent are brought into abutment with each other (joining portion 115 illustrated in Fig. 2) and are joined together (for example, laser welding). Each of the corners of the "prismatic tubular shape" may have a shape with a curvature. Moreover, the secondary battery in the present technology is not necessarily limited to the prismatic secondary battery.

In the present embodiment, case main body 110 is formed to be longer in the width direction (X direction) of secondary battery 1 than in each of the thickness direction (Y direction) and the height direction (Z direction) of secondary battery 1. The size (width) of case main body 110 in the X direction is preferably about 30 cm or more. In this way, secondary battery 1 can be formed to have a relatively large size (high capacity). The size (height) of case main body 110 in the Z direction is preferably about 20 cm or less, more preferably about 15 cm or less, and further preferably about 10 cm or less. Thus, (low-height) secondary battery 1 having a relatively low height can be formed, thus resulting in improved ease of mounting on a vehicle, for example.

Case main body 110 includes a pair of first side surface portions 111 and a pair of second side surface portions 112. The pair of first side surface portions 111 constitute parts of the side surfaces of case 100. The pair of second side surface portions 112 constitute the bottom surface portion and upper surface portion of case 100. The pair of first side surface portions 111 and the pair of second side surface portions 112 are provided to intersect each other. The pair of first side surface portions 111 and the pair of second side surface portions 112 are connected at their respective end portions. Each of the pair of first side surface portions 111 has an area larger than that of each of the pair of second side surface portions 112.

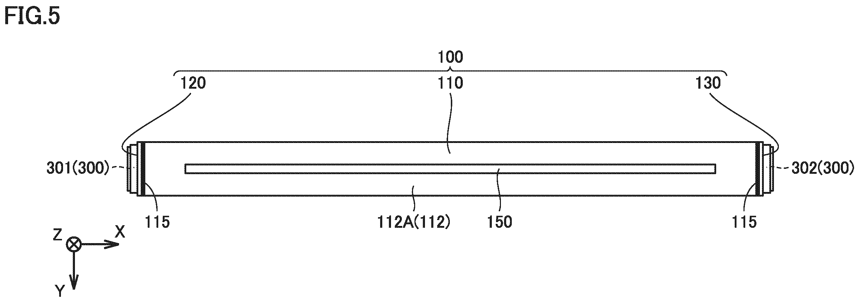

As shown in Fig. 5, a gas-discharge valve 150 is provided in one second side surface portion 112A of the pair of second side surface portions 112. Gas-discharge valve 150 extends in the width direction (X direction) of secondary battery 1. Gas-discharge valve 150 extends from the center of case main body 110 in the X direction to such an extent that gas-discharge valve 150 does not reach both ends of case main body 110 in the X direction. The shape of gas-discharge valve 150 can be changed appropriately.

The thickness of the plate-shaped member in gas-discharge valve 150 is thinner than the thickness of the plate-shaped member of case main body 110 other than gas-discharge valve 150. Thus, when the pressure in case 100 becomes equal to or more than a predetermined value, gas-discharge valve 150 is fractured prior to the other portions of case main body 110, thereby discharging the gas in case 100 to the outside.

As shown in Fig. 2, joining portion 115 is formed at the other second side surface portion 112B of the pair of second side surface portions 112. Joining portion 115 extends in the width direction (X direction) of secondary battery 1. At joining portion 115, the end sides of the plate-shaped member constituting case main body 110 are joined to each other.

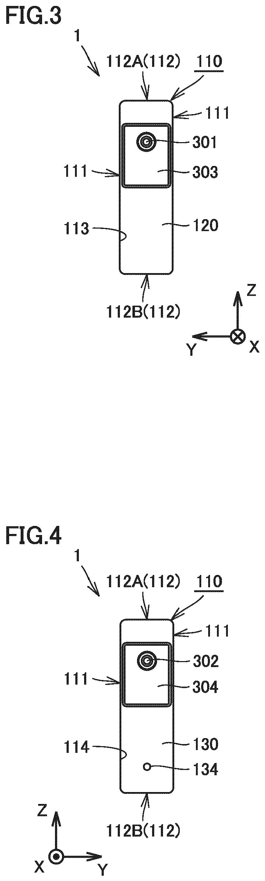

As shown in Fig. 3, an opening 113 (second opening) is provided at an end portion of case main body 110 on the -X side in the X direction. Opening 113 is sealed by sealing plate 120 (second sealing plate). Joining portion 115 is formed at opening 113 so as to seal opening 113. Each of opening 113 and sealing plate 120 has a substantially rectangular shape in which the Y direction corresponds to its short-side direction and the Z direction corresponds to its long-side direction. The substantially rectangular shape includes a rectangular shape or a generally rectangular shape such as a rectangular shape having corners each with a curvature.

A negative electrode terminal 301 (second electrode terminal) is provided on sealing plate 120. The position of negative electrode terminal 301 can be appropriately changed. Negative electrode terminal 301 is exposed to the outside of sealing plate 120.

As shown in Fig. 4, an opening 114 (first opening) is provided at an end portion of case main body 110 on the +X side in the X direction. Opening 114 is located at an end portion opposite to opening 113, and openings 113, 114 face each other. Opening 114 is sealed by sealing plate 130 (first sealing plate). Joining portion 115 is formed at opening 114 so as to seal opening 114. Each of opening 114 and sealing plate 130 has a substantially rectangular shape in which the Y direction corresponds to its short-side direction and the Z direction corresponds to its long-side direction.

Sealing plate 130 is provided with a positive electrode terminal 302 (first electrode terminal) and an injection hole 134. The positions of positive electrode terminal 302 and injection hole 134 can be appropriately changed.

Each of sealing plate 120 and sealing plate 130 is composed of a metal. Specifically, each of sealing plate 120 and sealing plate 130 is composed of aluminum, an aluminum alloy, iron, an iron alloy, or the like.

Negative electrode terminal 301 is electrically connected to a negative electrode of electrode assembly 200. Negative electrode terminal 301 is attached to sealing plate 120, i.e., case 100. Negative electrode terminal 301 is composed of a conductive material (more specifically, a metal), and can be composed of copper, a copper alloy, or the like, for example. A portion or layer composed of aluminum or an aluminum alloy may be provided at a portion of an outer surface of negative electrode terminal 301. Negative electrode terminal 301 is connected to a plate-shaped member 303.

Plate-shaped member 303 is located on the outer side with respect to sealing plate 120. Plate-shaped member 303 is disposed along sealing plate 120. Plate-shaped member 303 has electric conductivity. Plate-shaped member 303 is disposed to secure an area of connection with a bus bar or the like that electrically connects secondary battery 1 and another secondary battery adjacent thereto. The connection between negative electrode terminal 301 and plate-shaped member 303 can be formed by, for example, laser welding or the like.

Positive electrode terminal 302 is electrically connected to a positive electrode of electrode assembly 200. Positive electrode terminal 302 is attached to sealing plate 130, i.e., case 100. Positive electrode terminal 302 is composed of a conductive material (more specifically, a metal), and can be composed of aluminum, an aluminum alloy, or the like, for example. Positive electrode terminal 302 is exposed to the outside of sealing plate 130. Positive electrode terminal 302 is connected to a plate-shaped member 304.

Plate-shaped member 304 is located on the outer side with respect to sealing plate 130. Plate-shaped member 304 is disposed along sealing plate 130. Plate-shaped member 304 has electric conductivity. Plate-shaped member 304 is disposed to secure an area of connection with a bus bar or the like that electrically connects secondary battery 1 and another secondary battery adjacent thereto. The connection between positive electrode terminal 302 and plate-shaped member 304 can be formed by, for example, laser welding or the like.

Injection hole 134 is sealed by a sealing member (not shown). As the sealing member, for example, a blind rivet or another metal member can be used.

Electrode assembly 200 is an electrode assembly having a flat shape and having a below-described positive electrode and a below-described negative electrode stacked on each other. Specifically, electrode assembly 200 is, for example, a stacked type electrode assembly in which a plurality of positive electrodes and a plurality of negative electrodes are alternately stacked with separators (not shown) being interposed therebetween. However, in the present specification, the "electrode assembly" is not limited to the stacked type electrode assembly, and may be a wound type electrode assembly in which a strip-shaped positive electrode and a strip-shaped negative electrode are wound together with a strip-shaped separator being interposed therebetween. The separator can be constituted of, for example, a microporous membrane composed of polyolefin. When the electrode assembly is the stacked type electrode assembly including the plurality of positive electrodes and the plurality of negative electrodes, positive electrode tabs provided on the positive electrodes can be stacked to form a positive electrode tab group, and negative electrode tabs provided on the negative electrodes can be stacked to form a negative electrode tab group.

As shown in Fig. 6, case 100 accommodates electrode assembly 200. Fig. 6 illustrates a first electrode assembly 201 described below. First electrode assembly 201 is accommodated in case 100 such that the long-side direction thereof is parallel to the X direction.

Specifically, one or a plurality of the stacked type electrode assemblies and an electrolyte solution (electrolyte) (not shown) are accommodated inside an insulating sheet (not shown) disposed in case 100. Instead of the electrolyte solution, a solid electrolyte may be used.

First electrode assembly 201 includes a main body portion having a substantially rectangular shape, a negative electrode tab group 220, and a positive electrode tab group 250. Negative electrode tab group 220 is located at an end portion of first electrode assembly 201 on the -X side with respect to the main body portion thereof in the X direction. Positive electrode tab group 250 is located at an end portion of first electrode assembly 201 on the +X side with respect to the main body portion thereof in the X direction.

Each of negative electrode tab group 220 and positive electrode tab group 250 is formed to protrude from a central portion of electrode assembly 200 toward sealing plate 120 or sealing plate 130.

Current collectors 400 include a negative electrode current collector 400A and a positive electrode current collector 400B. Electrode assembly 200 is electrically connected to negative electrode terminal 301 and positive electrode terminal 302 through current collectors 400.

Negative electrode current collector 400A is electrically connected to negative electrode tab group 220 and negative electrode terminal 301. Negative electrode current collector 400A can be composed of a conductive material (more specifically, a metal such as copper or a copper alloy).

Positive electrode current collector 400B is electrically connected to positive electrode tab group 250 and positive electrode terminal 302. Positive electrode current collector 400B can be composed of a conductive material (more specifically, a metal such as aluminum or an aluminum alloy).

### (Configuration of Electrode Assembly 200)

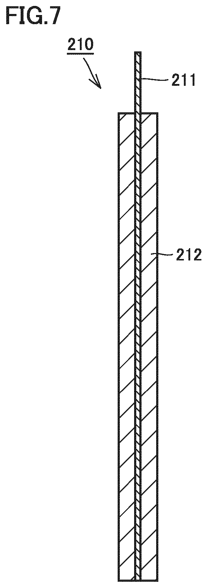

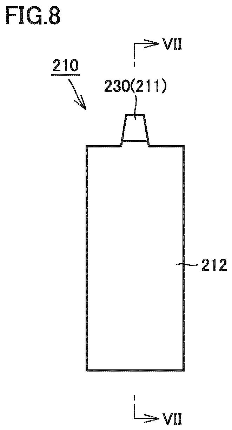

As shown in Figs. 7 and 8, negative electrode 210 includes a negative electrode core body 211 and a negative electrode active material layer 212. Negative electrode core body 211 is a copper foil or a copper alloy foil. Negative electrode active material layer 212 is formed by applying a negative electrode active material layer slurry using a die coater.

A negative electrode tab 230 constituted of negative electrode core body 211 is provided at one end portion, in the width direction, of negative electrode 210. When negative electrodes 210 are stacked, a plurality of negative electrode tabs 230 are stacked to form negative electrode tab group 220. The length of each of the plurality of negative electrode tabs 230 in the plurality of negative electrodes 210 in the protruding direction is appropriately adjusted in consideration of the state in which negative electrode tab group 220 is connected to negative electrode current collector 400A. The shape of negative electrode tab 230 is not limited to the one illustrated in Fig. 8.

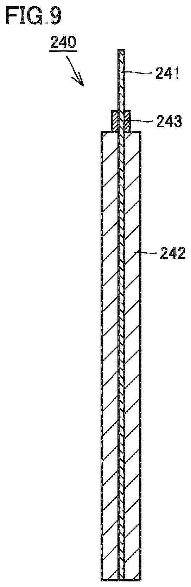

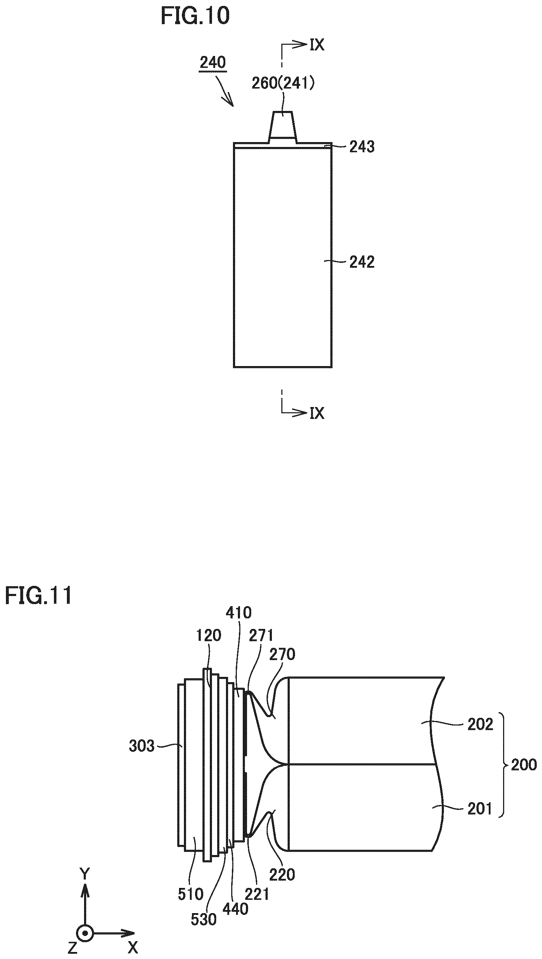

As shown in Figs. 9 and 10, positive electrode 240 has a polarity different from a polarity of negative electrode 210. Positive electrode 240 includes a positive electrode core body 241, a positive electrode active material layer 242, and a positive electrode protective layer 243. Positive electrode core body 241 is an aluminum foil or an aluminum alloy foil. Positive electrode active material layer 242 is formed on positive electrode core body 241 by applying a positive electrode active material layer slurry using a die coater.

A positive electrode tab 260 constituted of positive electrode core body 241 is provided at one end portion, in the width direction, of positive electrode 240. When positive electrodes 240 are stacked, a plurality of positive electrode tabs 260 are stacked to form positive electrode tab group 250. The length of each of positive electrode tabs 260 in the plurality of positive electrodes 240 in the protruding direction is appropriately adjusted in consideration of the state in which positive electrode tab group 250 is connected to positive electrode current collector 400B. The shape of positive electrode tab 260 is not limited to the one illustrated in Fig. 10.

Positive electrode protective layer 243 is provided at the root of positive electrode tab 260. It should be noted that positive electrode protective layer 243 may not necessarily be provided.

In a typical example, the thickness of (one) negative electrode tab 230 is smaller than the thickness of (one) positive electrode tab 260. In this case, the thickness of negative electrode tab group 220 is smaller than the thickness of positive electrode tab group 250.

### (Connection Structure between Electrode Assembly 200 and Current Collector 400)

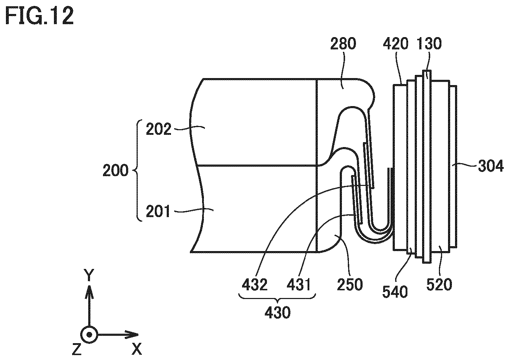

As shown in Figs. 11 and 12, electrode assembly 200 includes first electrode assembly 201 and a second electrode assembly 202. Each of first electrode assembly 201 and second electrode assembly 202 includes positive electrode 240 and negative electrode 210. Electrode assembly 200 may be constituted of three or more electrode assemblies.

Electrode assembly 200 is formed by overlapping first electrode assembly 201 and second electrode assembly 202 with each other. First electrode assembly 201 and second electrode assembly 202 are arranged side by side in the thickness direction (Y direction) of each of first electrode assembly 201 and second electrode assembly 202.

First electrode assembly 201 includes positive electrode tab group 250 (first electrode tab) disposed at an end portion (Fig. 12) of first electrode assembly 201 on one side and electrically connected to positive electrode 240, and negative electrode tab group 220 (second electrode tab) disposed at an end portion (Fig. 11) of first electrode assembly 201 on the other side and electrically connected to negative electrode 210.

Second electrode assembly 202 includes a positive electrode tab group 280 (third electrode tab) disposed at an end portion (Fig. 12) of second electrode assembly 202 on one side and electrically connected to positive electrode 240, and a negative electrode tab group 270 (fourth electrode tab) disposed at an end portion (Fig. 11) of second electrode assembly 202 on the other side and electrically connected to negative electrode 210.

As shown in Fig. 11 (structure on the negative electrode side), negative electrode tab groups 220, 270 are electrically connected to a current collector 410 (negative electrode current collector 400A). Current collector 410 (second current collector) to which negative electrode tab group 220 and negative electrode tab group 270 are joined can be constituted of a plate-shaped member composed of a metal. Moreover, current collector 410 may be constituted of a single member.

Negative electrode tab group 220 has a curved portion 221. Curved portion 221 is a portion at which negative electrode tab group 220 is curved. Negative electrode tab group 270 has a curved portion 271. Curved portion 271 is a portion at which negative electrode tab group 270 is curved.

Negative electrode tab group 220 and negative electrode tab group 270 are curved in opposite directions such that their tip portions come close to each other.

Moreover, the tip portions of negative electrode tab group 220 and negative electrode tab group 270 are separated from each other in the present embodiment; however, the present technology is not limited to this configuration, and the tip portions of negative electrode tab group 220 and negative electrode tab group 270 may be in contact with each other.

Current collector 410 electrically connects negative electrode terminal 301 to negative electrode tab group 220 and negative electrode tab group 270. Current collector 410 has a long-side direction in the Z direction and a short-side direction in the Y direction.

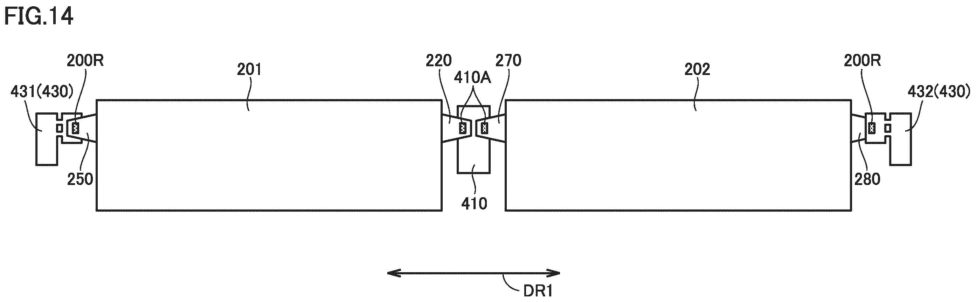

Each of negative electrode tab group 220 and negative electrode tab group 270 is joined to current collector 410 at a below-described joining portion 410A (see Fig. 14). Joining portion 410A can be formed by, for example, ultrasonic joining, resistance welding, laser welding, swaging, or the like.

An insulating member 510 is disposed between plate-shaped member 303 and sealing plate 120. An insulating member 530 is disposed between current collector 410 and sealing plate 120. It should be noted that negative electrode terminal 301 may be electrically connected to sealing plate 120, and sealing plate 120 may function as negative electrode terminal 301.

A spacer (not shown) may be disposed between sealing plate 120 and the main body portion (each of negative electrode tab groups 220, 270 is not included) of electrode assembly 200. The spacer can be composed of a resin member having an insulating property. Each of negative electrode tab groups 220, 270 passes internal to the spacer, thereby protecting each of negative electrode tab groups 220, 270.

As shown in Fig. 12 (structure on the positive electrode side), positive electrode tab group 250 and positive electrode tab group 280 are electrically connected to current collectors 430 (positive electrode current collector 400B). More specifically, positive electrode tab group 250 is joined to a current collector 431, and positive electrode tab group 280 is joined to a current collector 432.

The lengths of positive electrode tab groups 250, 280 can be appropriately changed. The lengths of positive electrode tab groups 250, 280 are preferably the same, but may be different from each other. The length of each of positive electrode tab groups 250, 280 may be shorter than that of each of negative electrode tab groups 220, 270 or may be longer than that of each of negative electrode tab groups 220, 270.

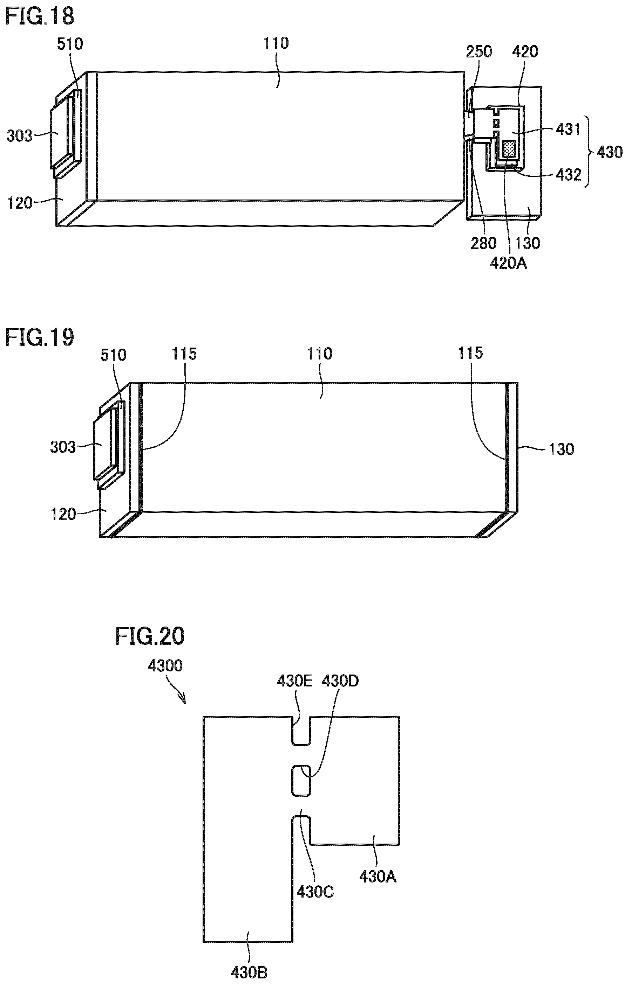

Current collector 431 (first current collector) to which positive electrode tab group 250 is joined is constituted of a stack (first stack) in which a plurality of metal plates 4300 (see Fig. 20) described later are stacked. Similarly, current collector 432 (third current collector) to which positive electrode tab group 280 is joined is constituted of a stack (second stack) in which a plurality of metal plates 4300 (see Fig. 20) are stacked. In each of current collectors 431, 432, the number of metal plates 4300 stacked is 2 or more, is preferably, for example, 3 or more, and is more preferably 5 or more. Further, for example, the number of metal plates 4300 stacked can be 20 or less, is preferably 15 or less, and is more preferably 10 or less. It should be noted that the same can be applied to a case where a current collector in which metal plates are stacked is used on the negative electrode side.

Current collectors 431, 432 electrically connect positive electrode terminal 302 to positive electrode tab group 250 and positive electrode tab group 280. Each of current collectors 431, 432 is joined to a positive electrode current collection portion 420 in a bent state, and is electrically connected to positive electrode terminal 302.

Since current collectors 430 are constituted of two separate current collectors 431, 432, a more stable current collecting structure can be formed. However, the scope of the present technology is not limited thereto, and positive electrode tab group 250 and positive electrode tab group 280 may be joined to one current collector 430, for example. By joining positive electrode tab group 250 and positive electrode tab group 280 to one current collector 430, the joining step can be simplified (the number of times of performing the joining step can be reduced).

In the example of Fig. 12, current collectors 431, 432 and positive electrode current collection portion 420 are joined together at a portion (joining region 420A in Fig. 18) at which current collectors 431, 432 are overlapped with each other. It should be noted that the scope of the present technology is not limited thereto, and current collectors 431, 432 may be joined to positive electrode current collection portion 420 at positions separated from or adjacent to each other in positive electrode current collection portion 420.

Positive electrode tab group 250 and positive electrode tab group 280 are respectively joined to current collectors 431, 432 at positive electrode joining regions 200R (see Fig. 14) described later. Each of positive electrode joining regions 200R can be formed by, for example, ultrasonic joining, resistance welding, laser welding, swaging, or the like.

Positive electrode joining region 200R between current collector 431 and positive electrode tab group 250 and positive electrode joining region 200R between current collector 432 and positive electrode tab group 280 are formed at positions separated from each other on the X-Y plane.

As shown in Fig. 12, positive electrode tab group 250 is disposed between an end portion of current collector 431 on the electrode assembly 200 side (left side in the figure) and an end portion of current collector 432 on the electrode assembly 200 side (left side in the figure) in the X direction (clearance between current collectors 431, 432). Positive electrode tab group 280 may be disposed in the clearance between current collectors 431, 432, or both positive electrode tab groups 250, 280 may be disposed in the clearance between current collectors 431, 432. Thus, the clearance between current collectors 431, 432 can be effectively utilized.

An insulating member 520 is disposed between plate-shaped member 304 and sealing plate 130. An insulating member 540 is disposed between positive electrode terminal 302 and sealing plate 130. It should be noted that positive electrode terminal 302 may be electrically connected to sealing plate 130, and sealing plate 130 may function as positive electrode terminal 302.

A spacer (not shown) may be disposed between sealing plate 130 and the main body portion (positive electrode tab groups 250, 280 are not included) of electrode assembly 200. The spacer can be composed of a resin member having an insulating property. Since each of positive electrode tab groups 250, 280 passes internal to the spacer, each of positive electrode tab groups 250, 280 is protected.

### (Manufacturing Process for Secondary Battery 1)

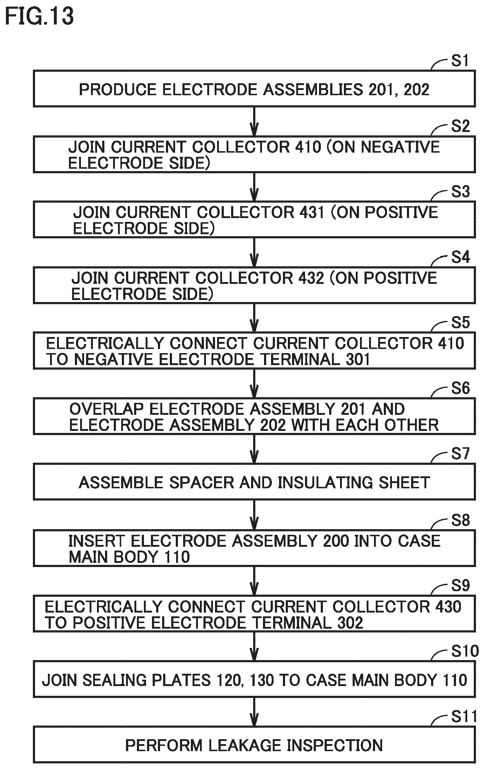

Hereinafter, a method of manufacturing the secondary battery according to the present embodiment will be described. Fig. 13 is a flowchart showing a method of manufacturing secondary battery 1.

As shown in Fig. 13, the method of manufacturing secondary battery 1 includes: a step (S1) of producing first electrode assembly 201 and second electrode assembly 202; a step (S2) of joining negative electrode tab group 220 and negative electrode tab group 270 to current collector 410; a step (S3) of joining positive electrode tab group 250 to current collector 431; a step (S4) of joining positive electrode tab group 280 to current collector 432; a step (S5) of electrically connecting, to negative electrode terminal 301, current collector 410 joined to negative electrode tab group 220 and negative electrode tab group 270; a step (S6) of overlapping first electrode assembly 201 and second electrode assembly 202 with each other; a step (S7) of assembling the spacer and the insulating sheet to electrode assembly 200; a step (S8) of inserting first electrode assembly 201 and second electrode assembly 202 into case main body 110; a step (S9) of electrically connecting, to positive electrode terminal 302, current collectors 431, 432 joined to positive electrode tab groups 250, 280; a step (S10) of joining sealing plates 120, 130 to case main body 110 so as to seal openings 113, 114; and a step (S11) of performing a leakage inspection.

Each of Figs. 14 to 19 is a diagram showing a step in the method of manufacturing secondary battery 1.

In the step (S1) of producing first electrode assembly 201 and second electrode assembly 202, parts of the tips of negative electrode tab group 220, positive electrode tab group 250, negative electrode tab group 270, and positive electrode tab group 280 are preferably cut such that they have the same tip length when bundled.

As shown in Fig. 14, after producing first electrode assembly 201 and second electrode assembly 202, negative electrode tab groups 220, 270 are joined to current collector 410 (S2), positive electrode tab group 250 is joined to current collector 431 (S3), and positive electrode tab group 280 is joined to current collector 432 (S4).

Each of negative electrode tab groups 220, 270 is joined to current collector 410 at joining portion 410A. Positive electrode tab group 250 is joined to current collector 431 at positive electrode joining region 200R. Positive electrode tab group 280 is joined to current collector 432 at positive electrode joining region 200R.

Current collector 431, first electrode assembly 201, current collector 410, second electrode assembly 202, and current collector 432 are arranged side by side in this order in a direction of arrow DR1.

In the example of Fig. 14, in the height direction of each of first electrode assembly 201 and second electrode assembly 202, each of current collector 410 and current collectors 431, 432 is disposed on one side with respect to the center of a corresponding one of first electrode assembly 201 and second electrode assembly 202. Moreover, in the height direction of each of first electrode assembly 201 and second electrode assembly 202, each of negative electrode tab group 220, positive electrode tab group 250, negative electrode tab group 270, and positive electrode tab group 280 is disposed on one side with respect to the center of a corresponding one of first electrode assembly 201 and second electrode assembly 202.

It should be noted that the scope of the present technology is not limited thereto, and in the height direction of each of first electrode assembly 201 and second electrode assembly 202, each of current collector 410 and current collectors 431, 432 may be disposed at the center of a corresponding one of first electrode assembly 201 and second electrode assembly 202. Moreover, in the height direction of each of first electrode assembly 201 and second electrode assembly 202, each of negative electrode tab group 220, positive electrode tab group 250, negative electrode tab group 270, and positive electrode tab group 280 may be disposed at the center of a corresponding one of first electrode assembly 201 and second electrode assembly 202.

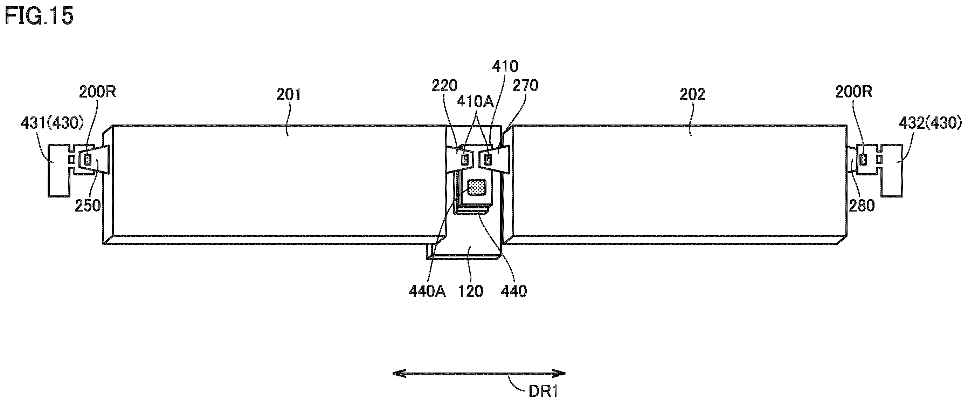

As shown in Fig. 15, current collector 410 joined to negative electrode tab group 220 and negative electrode tab group 270 is assembled to sealing plate 120. Current collector 440 and negative electrode terminal 301 are attached to sealing plate 120 in advance. Current collector 410 is assembled to sealing plate 120 with current collector 440 being interposed therebetween. Current collector 410 is joined to current collector 440 at a joining portion 440A. Joining portion 440A can be formed by laser welding or the like, for example. As a result, current collector 410 is electrically connected to negative electrode terminal 301 (S5).

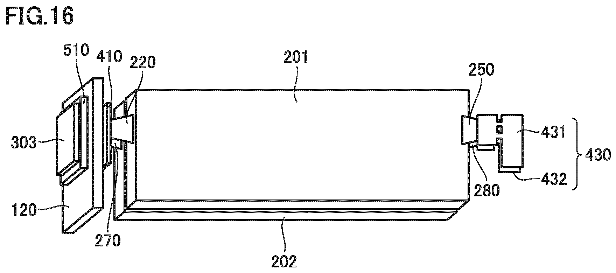

As shown in Fig. 16, negative electrode tab group 220 and negative electrode tab group 270 are bent in the thickness direction of each of first electrode assembly 201 and second electrode assembly 202 (direction orthogonal to the DR1 direction in Figs. 14 and 15) so as to overlap first electrode assembly 201 and second electrode assembly 202 with each other (S6). Here, negative electrode tab group 220 and negative electrode tab group 270 are bent such that their tip portions face each other.

When "overlapping" first electrode assembly 201 and second electrode assembly 202 with each other, first electrode assembly 201 and second electrode assembly 202 may be overlapped with each other directly, or another member may be disposed between first electrode assembly 201 and second electrode assembly 202. Further, first electrode assembly 201 and second electrode assembly 202 may or may not be fixed by a tape or the like.

The spacer and the insulating sheet are assembled to electrode assembly 200 (S7). It should be noted that the spacer and the insulating sheet are not necessarily essential in the present technology. The insulating sheet does not necessarily need to cover the entire surface of electrode assembly 200. When electrode assembly 200 is covered with the insulating sheet, the spacer is preferably also covered with the insulating sheet.

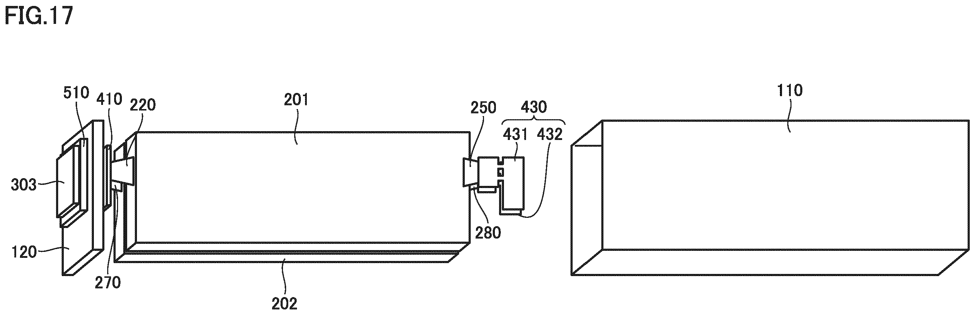

As shown in Fig. 17, first electrode assembly 201 and second electrode assembly 202 overlapped with each other are inserted into case main body 110 with the current collector 430 side being inserted first (S8).

When inserting electrode assembly 200 into case main body 110, electrode assembly 200 may be pulled from the positive electrode side, or may be pushed from the negative electrode side. When electrode assembly 200 is pushed from the negative electrode side, negative electrode tab group 220 and negative electrode tab group 270 can be curved at the same time.

As shown in Fig. 18, after electrode assembly 200 is inserted into case main body 110, each of current collectors 430 joined to positive electrode tab group 250 and positive electrode tab group 280 is assembled to sealing plate 130. Positive electrode current collection portion 420 and positive electrode terminal 302 are attached to sealing plate 130 in advance. Current collector 430 is assembled to sealing plate 130 with positive electrode current collection portion 420 being interposed therebetween. Current collector 430 is joined to positive electrode current collection portion 420 at joining region 420A. Joining region 420A can be formed by laser welding or the like, for example. As a result, current collector 430 is electrically connected to positive electrode terminal 302 (S9).

Current collectors 431, 432 joined to positive electrode tab groups 250, 280 are electrically connected to positive electrode terminal 302, and are then bent into the shape shown in Fig. 12 together with positive electrode tab groups 250, 280. Current collectors 431, 432 are preferably bent at the same time, but current collectors 431, 432 may be bent sequentially.

As shown in Fig. 19, sealing plates 120, 130 are joined to case main body 110 (step S10). Sealing plate 120 seals opening 113 of case main body 110, and sealing plate 130 seals opening 114 of case main body 110. Thus, first electrode assembly 201 and second electrode assembly 202 are accommodated in case 100.

After the above-described steps, an inspection such as a leakage inspection is performed (step S11). After the leakage inspection, secondary battery 1 is dried to remove moisture in case 100. Then, the electrolyte solution is injected into case 100 through injection hole 134. When injecting the electrolyte solution, case 100 is inclined with sealing plate 130 facing upward and sealing plate 120 facing downward, thereby injecting the electrolyte solution into case 100 via injection hole 134 of sealing plate 130. Thereafter, charging is performed to result in release of gas. For performing the charging to result in release of gas, injection hole 134 may be temporarily sealed. Thereafter, injection hole 134 is sealed, thereby completing secondary battery 1.

The order of the step of inserting electrode assembly 200 and the steps of connecting the current collectors is not limited to the above-described example. For example, the order of the steps (S2 to S4) of joining current collectors 410, 431, 432 can be appropriately changed.

In the present embodiment, it has been illustratively described that current collector 430 is electrically connected to positive electrode terminal 302 (S9) with first electrode assembly 201 and second electrode assembly 202 being completely disposed in case main body 110 after completing the step (S8) of inserting first electrode assembly 201 and second electrode assembly 202 into the main body of case 100; however, positive electrode terminal 302 and electrode assembly 200 may be electrically connected (S9) before completely ending the step (S8) of inserting electrode assembly 200 into case main body 110 (during the insertion step).

It has been illustratively described in the present embodiment that current collectors 431, 432 are bent after the step (S9) of electrically connecting current collectors 431, 432 to positive electrode terminal 302; however, current collectors 431, 432 may be deformed before the step (S9) of electrically connecting current collectors 431, 432 to positive electrode terminal 302.

### (Configuration of Metal Plate 4300)

As shown in Fig. 20, metal plate 4300 includes a first region 430A to be joined to positive electrode tab groups 250, 280, and a second region 430B to be joined to positive electrode current collection portion 420, as well as a connection portion 430C, a hole portion 430D, and a notch 430E, which are provided between first region 430A and second region 430B.

When forming current collector 430, the plurality of metal plates 4300 may be joined together at first region 430A and second region 430B (first portion). The plurality of metal plates 4300 are preferably joined together by ultrasonic joining, diffusion joining, or the like, for example. In the case of the diffusion joining, metal plates 4300 stacked are preferably joined together by applying pressure to stacked metal plates 4300 in a state in which stacked metal plates 4300 are heated at a temperature lower than the melting point of each of metal plates 4300. The plurality of metal plates 4300 are joined together before other conductive members (positive electrode tab groups 250, 280 and positive electrode current collection portion 420) are joined to first region 430A and second region 430B.

Connection portion 430C (second portion) of current collector 430 preferably includes a region at which the plurality of metal plates 4300 are not joined together. Thus, current collector 430 can be readily bent at connection portion 430C. The portion of each of metal plates 4300 to be bent preferably includes a region at which the plurality of metal plates 4300 are not to be joined together. Moreover, the plurality of metal plates 4300 are preferably not to be joined together at the whole of the portion of each of metal plates 4300 to be bent. Each of the regions (first region 430A and second region 430B) other than connection portion 430C may have a portion at which the plurality of metal plates 4300 are not to be joined together.

It should be noted that at the region at which metal plates 4300 are not joined together, metal plates 4300 may be in abutment with each other. Moreover, a slight clearance may be present between metal plates 4300. At the region at which metal plates 4300 are not joined together, metal plates 4300 are not welded or the like and there is therefore a clear boundary between metal plates 4300. For example, a natural oxide film is present on the surface of each metal plate 4300.

By providing hole portion 430D and notch 430E in connection portion 430C, the cross sectional area of connection portion 430C can be reduced to facilitate bending of current collector 430 at connection portion 430C. Moreover, connection portion 430C can also function as a fuse portion.

Each of metal plates 4300 can be composed of, for example, aluminum or an aluminum alloy. It should be noted that metal plate 4300 can also be composed of copper, a copper alloy, nickel, a nickel alloy, iron, or an iron alloy. The thickness of one metal plate 4300 is preferably larger than the thickness of one positive electrode tab 260, and is preferably about 3 times or more (more preferably about 5 times or more) as large as the thickness of one positive electrode tab 260. The thickness of one metal plate 4300 is preferably 0.05 mm or more, and is more preferably 0.08 mm or more, for example. Moreover, the thickness of one metal plate 4300 is preferably 0.5 mm or less, is more preferably 0.3 mm or less, and is further preferably 0.2 mm or less. It should be noted that the thickness of one metal plate 4300 is preferably 1/2 or less of the thickness of positive electrode current collection portion 420, and is more preferably 1/5 or less of the thickness of positive electrode current collection portion 420. It should be noted that the same can be applied to a case where a current collector in which metal plates are stacked is used on the negative electrode side.

The number of metal plates 4300 of each of current collectors 431, 432 can be appropriately changed. The total thickness (first thickness: T1) of each of current collectors 431, 432 is preferably larger than the total thickness (second thickness: T2) of each of positive electrode tab groups 250, 280 joined to current collectors 431, 432. T1/T2 is more preferably about 1.5 or more, and T1/T2 is further preferably about 2 or more.

It should be noted that the "total thickness of each of current collectors 431, 432" means the total thickness of portions of each of current collectors 431, 432 having no irregularities. Moreover, the "total thickness of each of positive electrode tab groups 250, 280" means the total thickness of portions thereof, at which each of positive electrode tab groups 250, 280 is provided, other than positive electrode joining region 200R.

In the present embodiment, current collector 430 constituted of the stack of the plurality of metal plates 4300 is used to provide current collector 430 that can be likely to be stably deformed while suppressing an increase in resistance. As a result, the size of positive electrode current collector 400B can be reduced to improve the energy density of secondary battery 1.

When each of current collectors 430 connected to positive electrode tab groups 250, 280 is electrically connected to positive electrode terminal 302 with first electrode assembly 201 and second electrode assembly 202 being disposed in case main body 110 and then current collector 430 is bent, secondary battery 1 having high energy density and high reliability can be more stably and efficiently manufactured because current collector 430 is constituted of the stack of the plurality of metal plates 4300. In this case, negative electrode tab groups 220, 270 are particularly preferably joined to one surface of current collector 410 with negative electrode tab groups 220, 270 being curved as shown in Fig. 11. It should be noted that the positive electrode side and the negative electrode side may be configured oppositely.

Moreover, in the present embodiment, in the step (S2) of joining current collector 410 to negative electrode tab groups 220, 270, negative electrode tab groups 220, 270 are joined to current collector 410 with first electrode assembly 201 being disposed on one side with respect to current collector 410 and second electrode assembly 202 being disposed on the other side with respect to current collector 410 as shown in Fig. 14. In this state, since each of the main body portions of first electrode assembly 201 and second electrode assembly 202 and current collector 410 are located relatively away from each other, there are many options for joining method, and each of negative electrode tab groups 220, 270 can be relatively short. Since each of negative electrode tab groups 220, 270 is short, the internal space of case 100 can be effectively utilized to further improve the energy density of secondary battery 1.

Moreover, since current collector 431 and current collector 432 are curved in the same direction with first electrode assembly 201 and second electrode assembly 202 being overlapped with each other in the present embodiment, current collector 432 can be disposed by efficiently utilizing a space on the inner peripheral side of the curved portion of current collector 431. As a result, the size of positive electrode current collector 400B can be further reduced to improve the energy density of secondary battery 1.

Moreover, in the present embodiment, by joining current collectors 431, 432 to positive electrode tab groups 250, 280 in advance (S3 and S4), positive electrode tab groups 250, 280 can be protected to suppress damage (deformation, tear, or the like) thereof in the subsequent step (S6) of overlapping first electrode assembly 201 and second electrode assembly 202 with each other and the subsequent step (S8) of inserting first electrode assembly 201 and second electrode assembly 202 into case main body 110. As a result, secondary battery 1 having high reliability can be provided.

### (Supplement)

In the present embodiment, as shown in Fig. 12, current collectors 431, 432 are bent to be curved in the same direction with first electrode assembly 201 and second electrode assembly 202 being overlapped with each other, but current collectors 431, 432 may be bent to be curved in opposite directions.

In the present embodiment, it has been illustratively described that in the state shown in Fig. 12, current collectors 431, 432 are joined to positive electrode tab groups 250, 280 from the same side (left side in the figure with respect to positive electrode tab groups 250, 280). In this case, in the state (Figs. 14 and 15) before overlapping first electrode assembly 201 and second electrode assembly 202 with each other, current collectors 431, 432 are joined to positive electrode tab groups 250, 280 from different sides.

It should be noted that the scope of the present technology is not limited to the above, and in the state shown in Fig. 12, current collectors 431, 432 may be joined to positive electrode tab groups 250, 280 from different sides. In this case, in the state (Figs. 14 and 15) before overlapping first electrode assembly 201 and second electrode assembly 202 with each other, current collectors 431, 432 are joined to positive electrode tab groups 250, 280 from the same side.

In the present embodiment, it has been illustratively described that the bent type current collector 430 constituted of the metal plate stack is used on the positive electrode side (Fig. 12) and current collector 410 constituted of the single member composed of the metal is used on the negative electrode side (Fig. 11); however, the scope of the present technology is not limited thereto, and there may be employed a structure opposite to the above between the positive electrode side and the negative electrode side. Moreover, instead of the single member, current collector 410 formed by integrating a plurality of members may be used.

Next, in each of the following embodiments, a specific configuration of a current collector used for each of the first current collector and the second current collector will be described. Since the first current collector and the second current collector have the same shape, the configuration of the first current collector will be described below.

### (Second Embodiment: Configuration of Current Collector 53)

In the first embodiment above, it has been described that the length of second region 430B joined to positive electrode current collection portion 420 is longer than the length of first region 430A joined to positive electrode tab group 250, 280 (in the upward/downward direction in the figures); however, it is not necessarily limited to this length relation. In the current collector described below, it will be described that the length of first region 430A joined to positive electrode tab group 250, 280 (in the upward/downward direction in the figures) is provided to be longer than the length of second region 430B joined to positive electrode current collection portion 420. It should be noted that the same portions as those in the first embodiment will not be described.

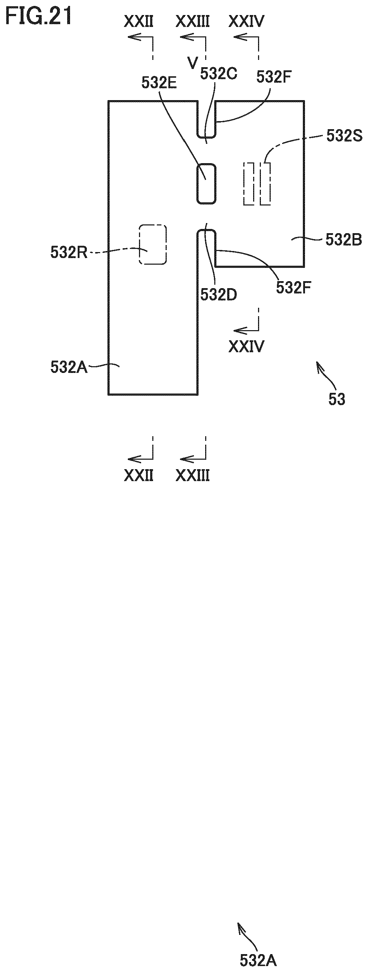

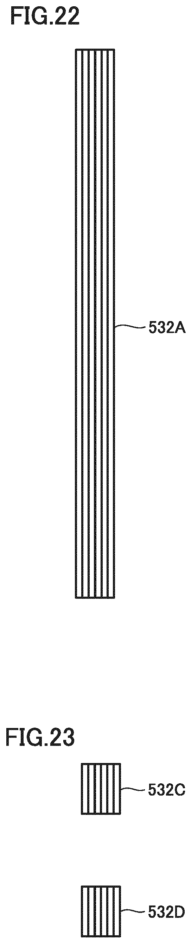

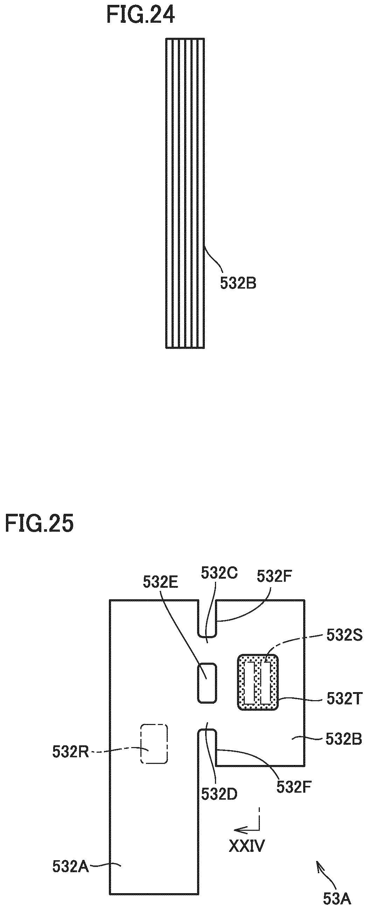

A configuration of a current collector 53 will be described with reference to Figs. 21 to 24. It should be noted that each of Figs. 21, 25, and the like is a developed view showing a state before current collector 53 is bent.

Current collector 53 is formed by stacking a plurality of metal plates 4300. Current collector 53 includes: a first region 532A connected to positive electrode tab group 250; and a second region 532B connected to positive electrode current collection portion 420 serving as another conductive member.

Each of a first fuse portion 532C and a second fuse portion 532D is provided between first region 532A and second region 532B as a connection portion that is melted and disconnected when a current having a predetermined value or more flows. The width of each of first fuse portion 532C and second fuse portion 532D is provided to be smaller than the width of second region 532B.

A first hole portion 532E is provided between first fuse portion 532C and second fuse portion 532D. First notches 532F each having a U shape and recessed inward are provided at respective end sides of first fuse portion 532C and second fuse portion 532D.

### (Joining State)

In a state before being connected to the tab group of electrode assembly 200, no joining region for the metal plates is provided in advance in each of first region 532A and second region 532B. Each of the figures shows: a joining portion 532R when positive electrode tab group 250, 280 is connected to first region 532A; and a joining portion 532S when positive electrode current collection portion 420 is connected to second region 532B.

Current collector 53 in the present embodiment has no joining portion before being joined to positive electrode tab group 250, 280 and positive electrode current collection portion 420.

Hereinafter, only differences from the second embodiment will be described with regard to current collectors of third to seventeenth embodiments.

### (Third Embodiment: Current Collector 53A)

A joining state of a current collector 53A of the present embodiment will be described with reference to Fig. 25.

A joining portion 532T (first joining portion) for the metal plates is provided in advance in a second region 532B of current collector 53A by ultrasonic joining, diffusion joining, or the like. A position at which joining portion 532T is provided is located at a position overlapping a position at which a joining portion 532S (second joining portion) is expected to be provided.

Joining portion 532S is provided in joining portion 532T, and the area of joining portion 532T is provided to be larger than the area of joining portion 532S.

Since joining portion 532T is provided in second region 532B in advance in this way, current collector 53A in which metal plates 4300 are stacked can be readily handled in a subsequent manufacturing step as in each of the above-described embodiments.

Specifically, current collector 53A and positive electrode current collection portion 420 can be stably joined to each other by including the step of applying a high-energy ray to joining portion 532T of current collector 53A in which the metal plates are joined together and then joining current collector 53A and positive electrode current collection portion 420 to each other at joining portion 532S.

In the joining step for joining portion 532T, diffusion joining is preferable because a plurality of recesses are less likely to be formed in a surface of the joining portion. The diffusion joining is a joining method in which pressure is applied with heat being applied at a temperature equal to or lower than the melting point of each of the metal plates. The thickness of the joining portion can be (slightly) smaller than the total thickness of the metal plates (sum of the thicknesses of the metal plates) around the joining portion.

In the case of the diffusion joining, unlike ultrasonic joining, it is not necessary to vibrate each of jigs that sandwich the stacked metal plates from both sides. Further, ultrasonic joining marks (irregularities) due to the stacked metal plates being sandwiched by an anvil and a horn used for the ultrasonic joining are not formed, thus resulting in a flat joining surface.

In joining portion 532T in which the metal plates are joined together in advance, there is no clearance between the metal plates. Therefore, when welding current collector 53A and positive electrode current collection portion 420 by application of a high-energy ray such as laser, occurrence of unintended damage (such as formation of a hole or the like) to each of the metal plates is suppressed, with the result that joining portion 532S can be stably formed.

In the third embodiment, in a region (portion to be joining portion 532R) of first region 532A in which positive electrode tab group 250 is to be joined, the metal plates are not joined together in advance in a state before first region 532A and positive electrode tab group 250 are joined to each other. Thus, in the case of ultrasonically joining positive electrode tab group 250 to first region 532A, when first region 532A and positive electrode tab group 250 are sandwiched by the anvil and the horn, the members are brought into abutment with each other in a more preferable state, with the result that the ultrasonic joining can be stably performed.

### (Fourth Embodiment: Current Collector 53B)

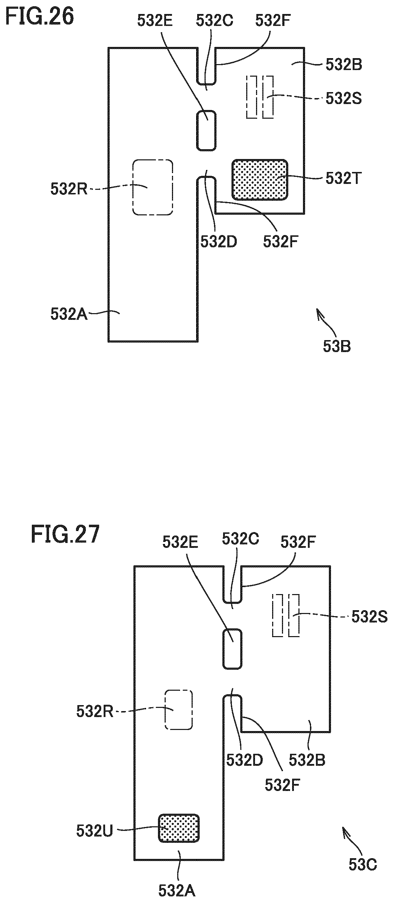

A joining state of a current collector 53B of the present embodiment will be described with reference to Fig. 26.

A joining portion 532T for the metal plates is provided in advance in a second region 532B of current collector 53B by ultrasonic joining, diffusion joining, or the like. A position at which joining portion 532T is provided is located at a position not overlapping a position at which a joining portion 532S is expected to be provided.

Since joining portion 532T is provided in second region 532B in advance in this way, current collector 53B in which metal plates 4300 are stacked can be readily handled in a subsequent manufacturing step.

Here, the surface of second region 532B in the region in which the metal plates are not joined together in advance is relatively flat. Therefore, second region 532B and positive electrode current collection portion 420 are facilitated to be brought into abutment with each other without a clearance therebetween, with the result that joining portion 532S can be stably formed by laser welding or the like.

### (Fifth Embodiment: Current Collector 53C)

A joining state of a current collector 53C of the present embodiment will be described with reference to Fig. 27.

A joining portion 532U (first joining region) for the metal plates is provided in advance in a first region 532A of current collector 53C by ultrasonic joining, diffusion joining, or the like. A position at which joining portion 532U is provided is located at a position not overlapping a position at which a joining portion 532R is expected to be provided.

### (Sixth Embodiment: Current Collector 53D)

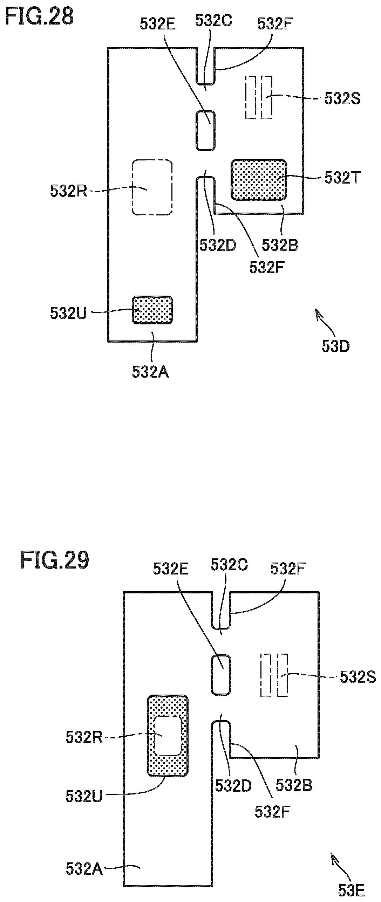

A joining state of a current collector 53D of the present embodiment will be described with reference to Fig. 28.

A joining portion 532U for the metal plates is provided in advance in a first region 532A of current collector 53D by ultrasonic joining, diffusion joining, or the like. A position at which joining portion 532U is provided is located at a position not overlapping a position at which a joining portion 532R is expected to be provided. A joining portion 532T for the metal plates is provided in a second region 532B in advance by ultrasonic joining, diffusion joining, or the like. A position at which joining portion 532T is provided is located at a position not overlapping a position at which a joining portion 532S is expected to be provided.

### (Seventh Embodiment: Current Collector 53E)

A joining state of a current collector 53E of the present embodiment will be described with reference to Fig. 29.

A joining portion 532U (first joining region) for the metal plates is provided in advance in a first region 532A of current collector 53E by ultrasonic joining, diffusion joining, or the like. A position at which joining portion 532U is provided is located at a position overlapping a position at which joining portion 532R is expected to be provided.

A joining portion 532R (second joining region) is provided in joining portion 532U (first joining region), and the area of joining portion 532U (first joining region) is provided to be larger than the area of joining portion 532R (second joining region).

### (Eighth Embodiment: Current Collector 53F)

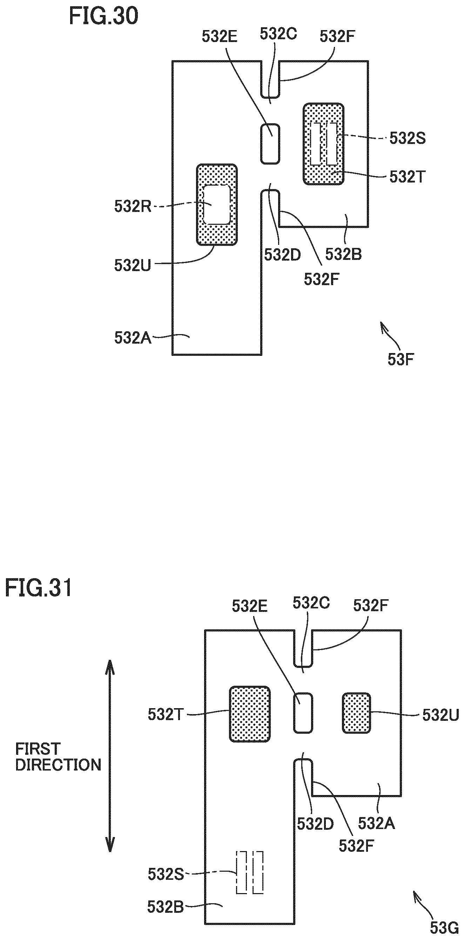

A joining state of a current collector 53F of the present embodiment will be described with reference to Fig. 30.

A joining portion 532U for the metal plates is provided in advance in a first region 532A of current collector 53F by ultrasonic joining, diffusion joining, or the like. A position at which joining portion 532U is provided is located at a position overlapping a position at which a joining portion 532R is expected to be provided. A joining portion 532T for the metal plates is provided in a second region 532B in advance by ultrasonic joining, diffusion joining, or like. A position at which joining portion 532T is provided is located at a position overlapping a position at which a joining portion 532S is expected to be provided.

### (Summary of Third to Eighth Embodiments)

Since each of the joining portions for the metal plates is formed in advance before joining the other members (other conductive members such as the positive electrode tab group and the positive electrode current collection portion) to the current collector that is the stack of the metal plates, handling in a subsequent manufacturing step can be facilitated. Moreover, the joining portion between the current collector and each of the other members can be stably formed, with the result that the secondary battery can have high energy density and high reliability.

It should be noted that when the current collector is divided into regions with a portion to serve as the bent portion (for example, a portion having a small cross sectional area) being regarded as a boundary, the joining portion only for the metal plates of the stack and the portion for attachment with the other conductive member (for example, positive electrode current collection portion 420) are located on the same region side.

### (Ninth Embodiment: Current Collector 53G)

A joining state of a current collector 53G of the present embodiment will be described with reference to Fig. 31. In current collector 53G, the area of a second region 532B is larger than the area of a first region 532A.

A joining portion 532U for the metal plates is provided in advance in first region 532A of current collector 53G by ultrasonic joining, diffusion joining, or the like. A joining portion 532T for the metal plates is provided in advance in second region 532B by ultrasonic joining, diffusion joining, or the like. A position at which joining portion 532T is provided is located at a position not overlapping a position at which joining portion 532S is expected to be provided.

### (Tenth Embodiment: Current Collector 53H)

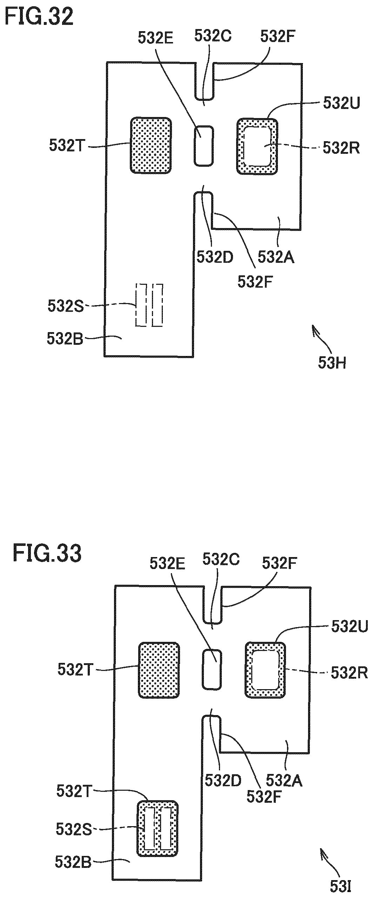

A joining state of a current collector 53H of the present embodiment will be described with reference to Fig. 32.

A joining portion 532U for the metal plates is provided in advance in a first region 532A of current collector 53H by ultrasonic joining, diffusion joining, or the like. A position at which joining portion 532U is provided is located at a position overlapping a position at which a joining portion 532R is expected to be provided.

### (Eleventh Embodiment: Current Collector 53I)

A joining state of a current collector 531 of the present embodiment will be described with reference to Fig. 33.

A joining portion 532U for the metal plates is provided in advance in a first region 532A of current collector 531 by ultrasonic joining, diffusion joining, or the like. A position at which joining portion 532U is provided is located at a position overlapping a position at which a joining portion 532R is expected to be provided. Joining portions 532T for the metal plates are provided at two positions in a second region 532B in advance by ultrasonic joining, diffusion joining, or the like. One of joining portions 532T is provided at a position overlapping a position at which a joining portion 532S is expected to be provided.

### (Summary of Ninth to Eleventh Embodiments)

The following step may be included: after joining portion 532R for positive electrode tab group 250, 280 is formed by ultrasonic joining on one side with respect to joining portion 532T (first connection portion) in which the metal plates are joined together, joining portion 532S in which positive electrode current collection portion 420 serving as the other conductive member is joined is provided by application of a high-energy ray in the current collector at a region of joining portion 532T located in a direction different from a direction in which joining portion 532R in which positive electrode tab group 250, 280 is joined is located.

Preferably, no joining portion for positive electrode current collection portion 420 is provided between joining portion 532T in which the metal plates are joined in advance and joining portion 532R in which positive electrode tab group 250, 280 is joined. Joining portion 532T and joining portion 532S may be arranged side by side in a first direction that is the long-side direction of second region 532B.

Even if a metal plate included in current collector 53G is deformed or sagged when ultrasonically joining positive electrode tab group 250, 280 to the current collector, the deformation or sag of the metal plate in joining portion 532S in which positive electrode current collection portion 420 is to be joined by the application of high-energy ray can be suppressed, with the result that the current collector and positive electrode current collection portion 420 can be stably joined to each other.

In joining portion 532R of the current collector in which positive electrode tab group 250, 280 is joined, (1) the metal plates may be joined (ultrasonically joined or the like) together in advance, or (2) the metal plates may not be joined (ultrasonically joined or the like) together in advance.

In joining portion 532S of the current collector in which positive electrode current collection portion 420 serving as the other conductive member is joined, (1) the metal plates may be joined (ultrasonically joined or the like) together in advance, or (2) the metal plates may not be joined (ultrasonically joined or the like) together in advance.

In a state in which the current collector is unbent (state before being bent), joining portion 532T (first connection portion) and joining portion 532R in which positive electrode tab group 250, 280 is joined may be arranged side by side in a second direction perpendicular to the first direction (plane in which the metal plates extend).

### (Twelfth Embodiment: Current Collector 53J)

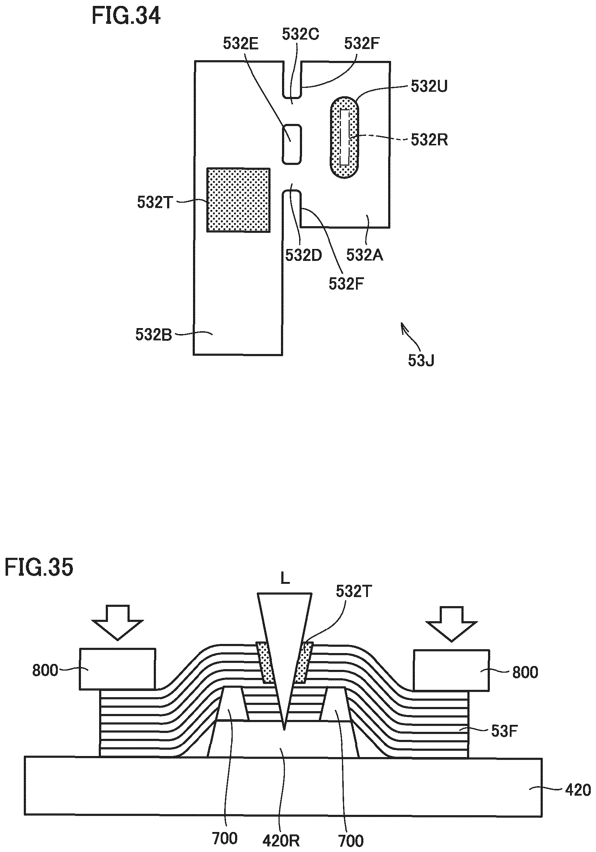

A joining state of a current collector 53J of the present embodiment will be described with reference to Fig. 34.

A joining portion 532U for the metal plates is provided in advance in a first region 532A of current collector 53J by ultrasonic joining, diffusion joining, or the like. When providing this joining portion 532U, the contour of joining portion 532U is formed to be elliptical, thereby suppressing local stress concentration when force is applied to current collector 53J including the stack. The same can be resulted when this elliptical shape is applied to each of the above-described embodiments.

A process of manufacturing the secondary battery using each of current collectors 53A to 53J described in the above-described third to twelfth embodiments can include the following steps.

The process of manufacturing the secondary battery using each of current collectors 53A to 53J includes: a preparation step of preparing the current collector (first current collector) having the joining portion in which the metal plates are partially joined together; a first tab group connection step of joining positive electrode tab group 250, 280 (first tab group) to the first region; and an other conductive member connection step of joining positive electrode current collection portion 420 (other conductive member) to the second region.

Further, the process includes a step of bending the current collector between the first region and the second region after the first tab group connection step and the other conductive member connection step.

The process of manufacturing the secondary battery using each of current collector 53A, current collector 53F, current collector 53H, and current collector 53I includes a step of joining the current collector and positive electrode current collection portion 420 to each other by applying a high-energy ray to the joining portion of the current collector in which the metal plates are joined together.

The process of manufacturing the secondary battery using each of current collector 53B, current collector 53C, current collector 53D, current collector 53E, current collector 53G, and current collector 53H includes a step of joining the second region of the current collector and positive electrode current collection portion 420 to each other by applying a high-energy ray to a region of the current collector in which the metal plates are not joined together.

The process of manufacturing the secondary battery using each of current collector 53E, current collector 53F, current collector 53H, current collector 53I, and current collector 53J includes a step of joining the current collector and positive electrode tab group 250, 280 together with positive electrode tab group 250, 280 being brought into abutment with the joining portion of the current collector in which the metal plates are joined together.

The process of manufacturing the secondary battery using each of current collector 53B, current collector 53C, and current collector 53D includes a step of joining the current collector and positive electrode tab group 250, 280 to each other with positive electrode tab group 250, 280 being brought into abutment with a region of the current collector in which the metal plates are not joined together.

### (Thirteenth Embodiment)

Next, with reference to Fig. 35, the following describes a case where the portion of the stack in which the metal plates are joined in advance is welded to the other conductive member by application of a high-energy ray such as laser.

As shown in Fig. 35, ribs 700 (protrusions) are provided on positive electrode current collection portion 420, joining portion 532T of current collector 53F that is the metal stack is pressed against positive electrode current collection portion 420 including ribs 700, and laser L is applied to joining portion 532T, thereby improving weldability between joining portion 532T of current collector 53F and positive electrode current collection portion 420 including ribs 700. On this occasion, the weldability can be further improved by using a jig 800 to press current collector 53F located on the outer side with respect to (in the surroundings of) ribs 700.

The above is not limited to current collector 53F, and can be applied to a similar welding location in each of the current collectors described in the above-described embodiments.

### (Fourteenth Embodiment)

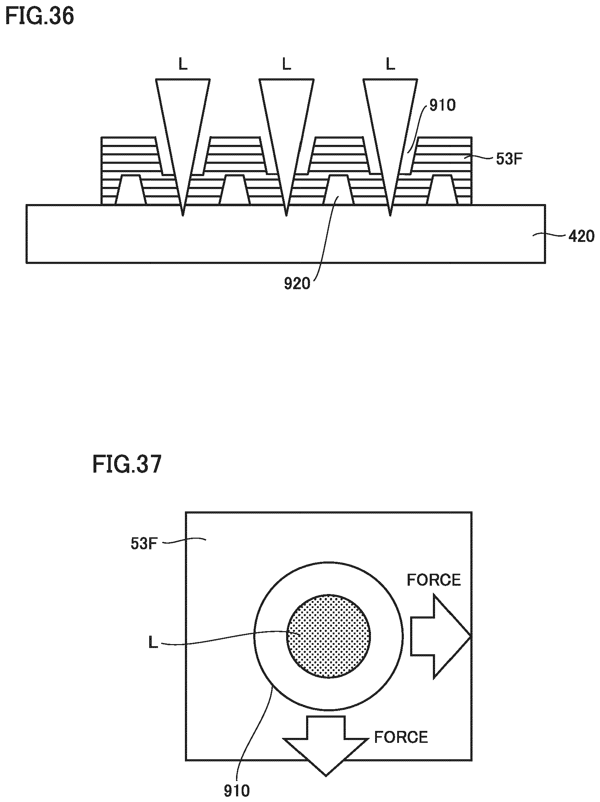

Next, with reference to Figs. 36 to 40, the following describes a modification when the portion of the stack in which the metal plates are ultrasonically joined in advance is laser-welded to the other conductive member.

Referring to Fig. 36, a plurality of recesses 910 and a plurality of recesses 920 are provided as ultrasonic joining marks (anvil marks and horn marks) in the front and rear surfaces of joining portion 532T of current collector 53F. The welding may be performed by laser L at the ultrasonic joining marks.

When recess 910 serving as one ultrasonic joining mark is observed in a plan view as shown in Fig. 37, laser L can be applied to recess 910. In this case, when recess 910 has a circular shape and laser L also has a circular shape, no stress concentration portion is formed in response to force (arrow F in the figure) in any direction on a plane other than directions of pulling to separate the joining portion, thereby suppressing tear of each of the metal plates. It should be noted that recesses 910 serving as the ultrasonic joining marks located on the upper side and recesses 920 serving as the ultrasonic joining marks located on the lower side may be disposed so as not to face each other and so as to be deviated from each other. Thus, joining failure and breakage of the metal plate (breakage of the foil) can be suppressed.

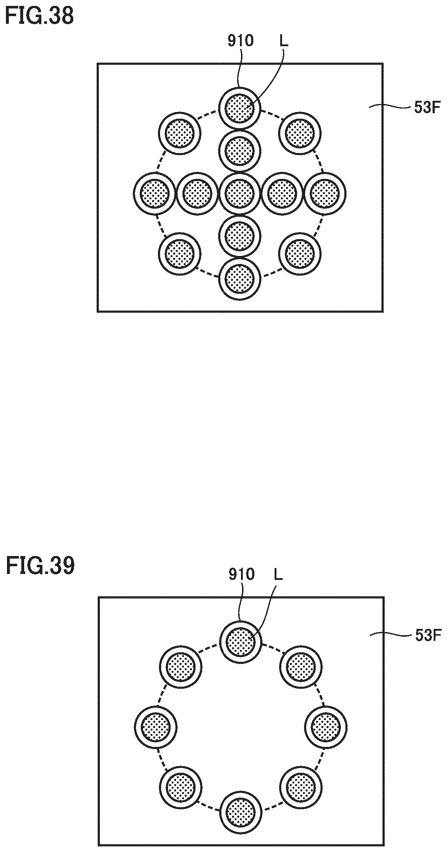

As shown in Fig. 38, when recesses 910 serving as the ultrasonic joining marks among the ultrasonic joining marks formed in the joining portion are made small, processability in the ultrasonic joining can be improved. Further, when recesses 910 serving as the plurality of ultrasonic joining marks each having a circular shape are arranged in the form of a circle and a plurality of recesses 910 are also arranged inside the circle, no stress concentration portion is formed, thereby suppressing tear of each of the metal plates.

It should be noted that at least when only recesses 910 serving as the ultrasonic joining marks each having a circular shape are arranged in the form of a circle as shown in Fig. 39, it can be expected to suppress formation of a stress concentration portion.

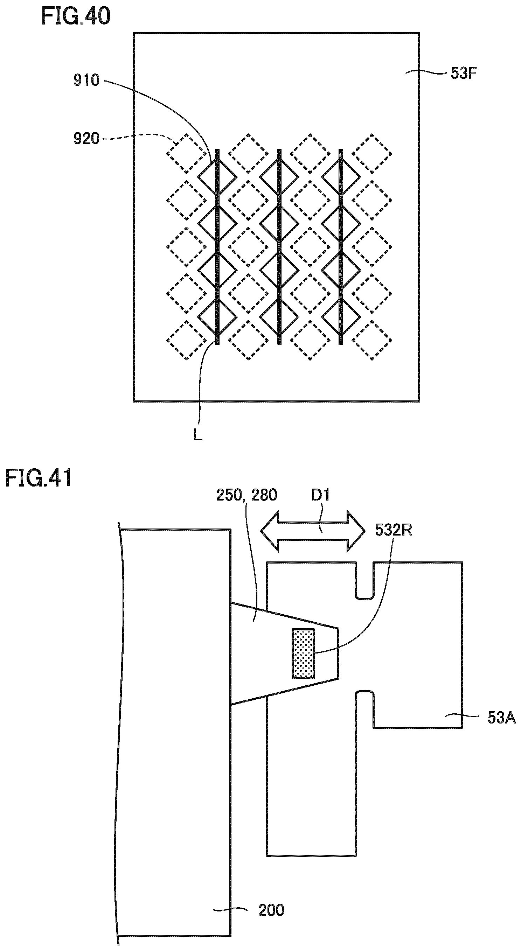

As shown in Fig. 40, recesses 910, 920 serving as the ultrasonic joining marks may be formed to each have a rectangular shape and may be deviated between the upper and lower surfaces of joining portion 532T, and laser L may be scanned along recesses 910 arranged in the upper surface so as to perform welding in the form of a line.

### (Fifteenth Embodiment)

Next, the ultrasonic joining portion between the first region of the current collector and the positive electrode tab group will be described with reference to Fig. 41.

In a joining portion 532R, ultrasonic vibration may be applied in the protruding direction of positive electrode tab group 250, 280 (direction of arrow D1 in the figure). With the vibration in the D1 direction, stress concentration at the root of the tab is less likely to occur when the tab is stretched during the joining, thereby suppressing occurrence of breakage of the tab. As a result, joining quality in the secondary battery can be stabilized.

When the region in which the metal plates are joined in advance is ultrasonically joined to the positive electrode tab group, the joining for the metal plates is preferably diffusion joining. No irregularities are preferably present in the surface of the stack of the metal plates to be brought into abutment with the positive electrode tab group. The metal plates are joined together and the one metal plate stack (state close to one metal plate) and the tab group can be ultrasonically joined to each other, thereby attaining stable joining.

When the region in which the metal plates are not joined together in advance is ultrasonically joined to the tab group, both their outer surfaces are flat, for example, the metal plate and the tab group are brought into abutment with each other in a preferable state, thereby attaining stable joining, which is preferable.

### (Sixteenth Embodiment)

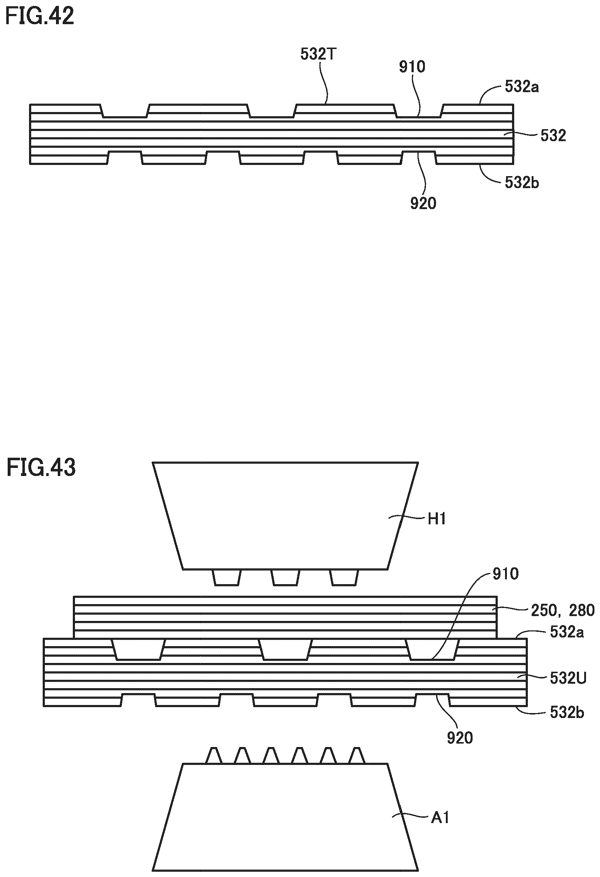

Next, with reference to Figs. 42 to 44, the following describes an orientation of each surface of the first region when ultrasonically joining the positive electrode tab group to the joining region of the first region of the current collector in which ultrasonic joining has been performed in advance.

The sizes (areas when viewed in a plan view) of recesses 910, 920 formed in a horn surface 532a and an anvil surface 532b can be freely set. The size of each of recesses 910, 920 is smaller, the fixation of first region 532A can be more stable.

In Fig. 43, the size of each recess 910 is larger than the size of each recess 920, and horn surface 532a in which recess 910 is formed is disposed in abutment with first region 532A of current collector 53E.

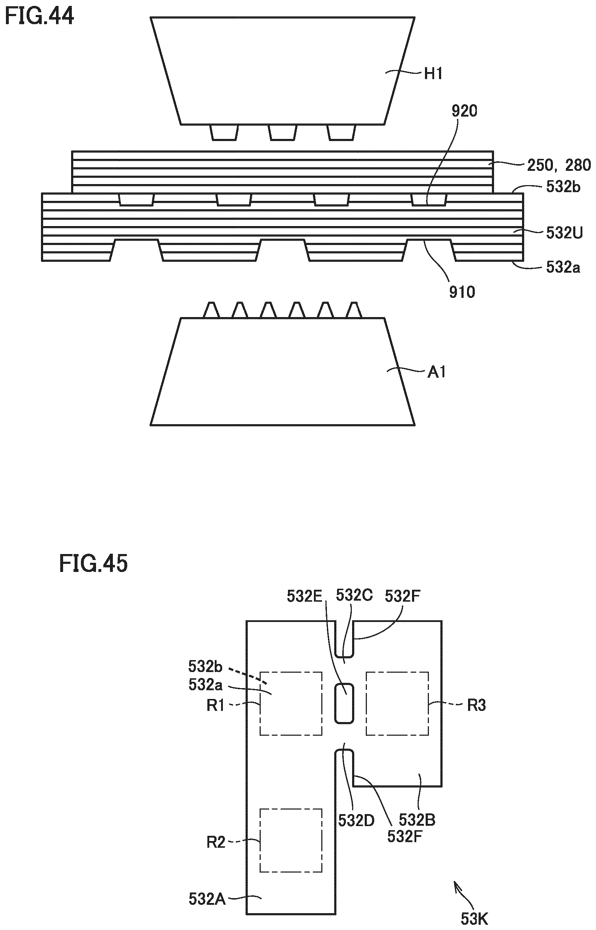

In Fig. 44, the size of recess 910 is larger than the size of recess 920, and anvil surface 532b in which recess 920 is formed is disposed in abutment with first region 532A of current collector 53E.

The joining may be performed by any of the methods shown in Figs. 43 and 44. Preferably, as shown in Fig. 44, the ultrasonic joining is performed in a state in which the surface (for example, anvil surface 532b) of positive electrode tab group 250, 280 on the side on which the size of each of the formed recesses is small is disposed in abutment with first region 532A of current collector 53E.

Moreover, when the size of each of recesses 920 is small and the number of recesses 920 is large, local stress is generated at the time of joining by joining anvil surface 532b to positive electrode tab group 250, 280, thereby facilitating the joining (it can be expected that the processability is improved to result in increased joining strength).

### (Seventeenth Embodiment)

Next, with reference to Figs. 45 to 47, the following describes a case where positive electrode tab group 250, 280 is joined to the first region of the current collector in which no ultrasonic joining has been performed, and positive electrode current collection portion 420 is joined to the second region. For example, current collector 53D described in the sixth embodiment can be exemplified.

As shown in Fig. 45, a joining region R1 for the stacked metal plates and a joining region R2 in which positive electrode tab group 250, 280 is expected to be joined are located in first region 532A, and a joining region R3 in which positive electrode current collection portion 420 is expected to be joined is located in second region 532B.

In joining region R1 for the stacked metal plates, as in the cross section shown in Fig. 42, horn surface 532a is formed as the ultrasonic pressing marks in the illustrated surface and anvil surface 532b is formed as the ultrasonic pressing marks in the surface opposite to the illustrated surface.

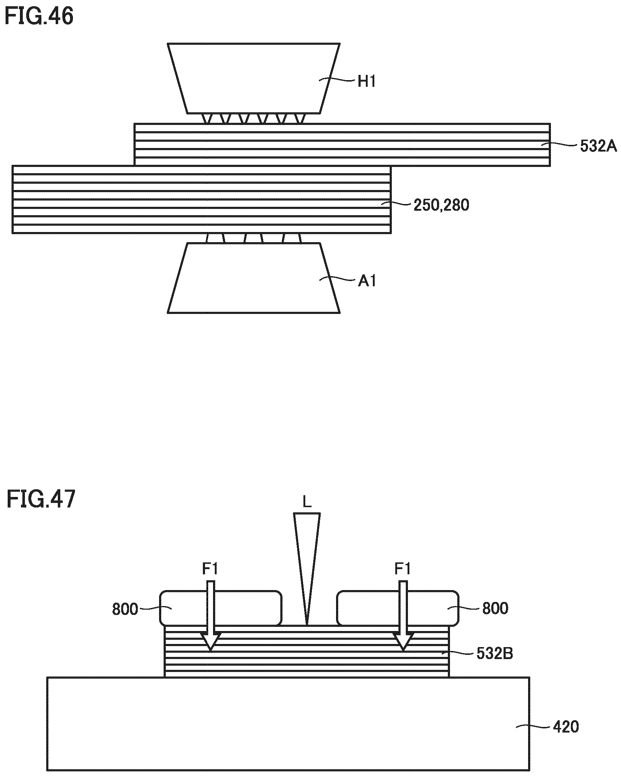

As shown in Fig. 46, ultrasonic joining marks resulting from horn H1 and anvil A1 sandwiching them are formed in joining region R2 joined to positive electrode tab group 250, 280.

As shown in Fig. 47, preferably, the region of second region 532B in which the metal plates are not joined together (portion in which there are no pressing marks provided by anvil A1 and horn H1) is pressed by jig 800 (in a direction of arrow F1 in the figure) and welding is performed by laser L. The portion to which laser L is applied may be pressed by jig 800 so as not to form a clearance between the metal plates.

Most preferably, the metal plates are joined together by a method, such as diffusion joining, by which no irregularities are formed in the surface of the stack of the metal plates, and that portion is laser-welded.

Although the positive electrode side has been illustratively described in the description of the above embodiments, the same configuration can be applied to the negative electrode side.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A method of manufacturing a secondary battery, wherein
the secondary battery includes
an electrode assembly (200) including a first electrode and a second electrode having a polarity different from a polarity of the first electrode,
a case (100) that accommodates the electrode assembly (200),
a first tab group (250, 280) in which a plurality of first electrode tabs (250) electrically connected to the first electrode are stacked, and
a first current collector (53A) connected to the first tab group (250, 280),
the first current collector (53A) is a first stack in which a plurality of metal plates (4300) are stacked,
the first current collector (53A) includes a first region (532A) and a second region (532B),
the first tab group (250, 280) is joined to the first region (532A), and
another conductive member (420) is joined to the second region (532B),
the method comprising:
preparing the first current collector (53A) having a joining portion (532T) in which the metal plates (4300) are partially joined together;
joining the first tab group (250, 280) to the first region (532A); and
joining the other conductive member (420) to the second region (532B).

2. The method of manufacturing the secondary battery according to claim 1, comprising bending the first current collector (53A) between the first region (532A) and the second region (532B) after the joining the first tab group (250, 280) to the first region (532A) and the joining the other conductive member (420) to the second region (532B).

3. The method of manufacturing the secondary battery according to claim 1 or 2, comprising joining the first current collector (53A) and the other conductive member (420) to each other by applying a high-energy ray to the joining portion (532T) of the first current collector (53A) in which the metal plates (4300) are joined together.

4. The method of manufacturing the secondary battery according to claim 3, wherein
the other conductive member (420) has a protrusion (700),
the method comprising joining the first current collector (53A) and the protrusion (700) to each other by applying the high-energy ray to the first current collector (53A) disposed on the protrusion (700).

5. The method of manufacturing the secondary battery according to any one of claims 1 to 4, comprising joining the first current collector (53A) and the other conductive member (420) to each other by applying a high-energy ray to a region of the first current collector (53A) in which the metal plates (4300) are not joined together.

6. The method of manufacturing the secondary battery according to claim 5, comprising joining the first current collector (53A) and the other conductive member (420) to each other in a state in which the first current collector (53A) is pressed using a jig against the other conductive member (420) in a surrounding of the region to which the high-energy ray is applied.

7. The method of manufacturing the secondary battery according to any one of claims 1 to 6, comprising joining the first current collector (53A) and the first tab group (250, 280) to each other with the first tab group (250, 280) being brought into abutment with the joining portion (532T) of the first current collector (53A) in which the metal plates (4300) are joined together.

8. The method of manufacturing the secondary battery according to any one of claims 1 to 7, comprising joining the first current collector (53A) and the first tab group (250, 280) to each other with the first tab group (250, 280) being brough into abutment with a region of the first current collector (53A) in which the metal plates (4300) are not joined together.

9. A secondary battery comprising:
an electrode assembly (200) including a first electrode and a second electrode having a polarity different from a polarity of the first electrode;
a case (100) that accommodates the electrode assembly (200);
a first tab group (250, 280) in which a plurality of first electrode tabs (250) electrically connected to the first electrode are stacked; and
a first current collector (53A) connected to the first tab group (250, 280), wherein
the first current collector (53A) is a first stack in which a plurality of metal plates (4300) are stacked,
the first current collector (53A) includes a first region (532A) and a second region (532B),
the first tab group (250, 280) is joined to the first region (532A),
another conductive member (420) is joined to the second region (532B), and
the first current collector (53A) has a region in which the metal plates (4300) are joined together, apart from a portion joined to the first tab group (250, 280) and a portion joined to the other conductive member (420).

10. The secondary battery according to claim 9, wherein
the first current collector (53A) has a first joining portion (532T) in which the metal plates (4300) are joined together,
a second joining portion (532S) in which the first current collector (53A) and the other conductive member (420) are laser-welded is provided, and
when viewed along a stacking direction of the metal plates (4300), an area of the first joining portion is larger than an area of the second joining portion.

11. The secondary battery according to claim 10, wherein the second joining portion (532S) is provided in the first joining portion (532T).

12. The secondary battery according to any one of claims 9 to 11, wherein
the first current collector (53A) is provided with a plurality of first recesses (920) in a first outer surface that is one outer surface of the first current collector (53A), and
a joining portion (532T) between the first current collector (53A) and the other conductive member (420) is formed in a form of a line along the first recesses (920).
